# EUROPEAN PATENT SPECIFICATION

(11) **EP 3 926 458 B1**
(45) Date of publication and mention of the grant of the patent: **11.09.2024**
(21) Application number: 20179907.9
(22) Date of filing: 15.06.2020
(51) Int. Cl.: G06F 3/16, G10L 15/18, G10L 15/22

(54) **METHOD AND DEVICE FOR USING THE SAME UTTERANCES TO TRIGGER DIFFERENT ACTIONS WITH AN ASSISTANT**
VERFAHREN UND VORRICHTUNG ZUR VERWENDUNG DER GLEICHEN ÄUSSERUNGEN, UM VERSCHIEDENE AKTIONEN MIT EINEM ASSISTENTEN AUSZULÖSEN
PROCÉDÉ ET DISPOSITIF POUR UTILISER LES MÊMES ÉNONCÉS POUR DÉCLENCHER DES ACTIONS DIFFÉRENTES AVEC UN ASSISTANT

(43) Date of publication of application: 22.12.2021
(73) Proprietor: Deutsche Telekom AG, 53113 Bonn (DE)
(72) Inventor: STEPANEK, Nicolas Walter, 64385 Reichelsheim (DE); THIES, Emil, 47166 Duisburg (DE)
(74) Representative: Vossius & Partner Patentanwälte Rechtsanwälte mbB

(56) References cited:
- US-B1- 10 629 191

## Description

The present invention relates to a system for providing an assistant, a method for controlling a system for providing an assistant and a mobile terminal.

According to voice assistants or text based assistants as known from the prior art, a natural language understanding unit (NLU) determines the intent of the user, i.e. which function, also called skill, is to be performed, according to previously defined/trained examples sentences. Furthermore, the NLU can extract data or entities from the utterance and provide said data as a parameter to the function or skill to be performed. The skill may be provided by the platform of the voice assistant or by an external provider. However, the skill needs to match the communication protocol of the platform.

A backend may provide encapsulated functions comprising a local context store. Said local context store often comprises data for the user of the respective skill or function, e.g. a call log for call-backs for the skill "telephony".

The skill itself may also comprise local data for a context, which rather corresponds to a session store. Therein, data for performing the function may be temporarily stored in order to be available during a dialog via the NLU. The NLU is informed that the skill keeps a session open such that further enquiries may also be sent to the skill and no further skill may be invoked. Depending on the platform, data of the respective session may be provided with the requests for a dialog and answers such that they are available within the NLU or remain in the skill.

In the NLU, a context store may be provided which supports the NLU during a dialog or a session with a skill, e.g. by saving extracted entities or session data from the skill such that they may be used by the NLU during the next invocation session or may be provided again to the skill with the next invocation.

However, the prior art shows limitations by a 1:1 mapping of a user's intent to the respective function or skill, e.g. by a lookup table of sample utterances to skill/intents. Due to the fact that the skills are often provided in a so-called sandbox or by third-party providers, they may not directly interchange data.

US 10 629 191 B1 relates to methods and systems for deploying and managing scalable multi-service virtual assistant platforms.

It is therefore an object of the present invention to provide an improved voice assistant.

In the whole disclosure, the terms "means" and "unit" may be used interchangeably. Furthermore, a processor may be provided configured to perform the tasks of one or multiple means or units. At least one of the means or units may be provided in the processor. The respective means or units may also be interconnected via an interface. "Utterance", "invocation" and similar terminology may denote a voice input as well as a text input and are not to be construed as limiting.

The invention is defined in the independent claims. Dependent claims describe preferred embodiments.

A system for providing an assistant according to the present disclosure comprises an input/output unit configured to receive at least one invocation by a user. A natural language understanding, NLU, unit is configured to determine a user's intent based on the at least one invocation, wherein the NLU unit is further configured to extract at least one entity from the text if the invocation comprises further information. A skill unit is configured to determine at least one skill based on the user's intent, and a backend service unit comprises a context broker configured to store the at least one entity of the present and/or previous invocation as a previous context. The input/output unit is configured to perform a function based on the skill and/or the previous context.

A voice receiving unit may be configured to receive a voice invocation by a user. A voice transcription unit may be configured to transcribe the at least one received invocation into text, preferably into computer-readable text. The voice receiving unit may be configured to temporarily store the received voice or directly provide the voice to the voice transcription unit. A user interface may be provided and configured to receive a text invocation by a user. The user interface may e.g. be a keypad. The input/output unit may further comprise a voice output unit and/or display unit configured to output information to the user.

Each skill may comprise a session store configured to store data about the invocation in the skill unit.

The backend service unit may comprise a local context store for each skill, and the context broker may provide data to and retrieve data from the context stores. External data may be provided to the context broker, wherein the external data may comprise user preferences and/or user usage data and/or correlated data.

Correlated data may refer to preferences of other users or predetermined correlations such as "user who [liked/do/...] also [liked/do/...] this or that".

Preferably, the NLU unit further comprises an NLU context store, wherein the NLU context store is configured to store data on the at least one invocation and further configured to communicate with the context broker to send and/or retrieve data. Preferably, the NLU unit is configured to determine a user's intent based on previously stored example invocations.

The skill unit may be configured to determine a further skill based on the at least one skill.

The system may further comprise an interface connecting at least two of the units.

Preferably, the context broker is configured to store the context for a predetermined length of time and/or a predetermined number of accesses.

The respective units of the system as described above may be provided in a single device or a plurality of devices, e.g. a cloud, a server, a mobile terminal or similar.

The present disclosure also relates to a method of controlling a system for providing an assistant, preferably as described above, the method comprising receiving at least one invocation by a user, determining a user's intent based on the at least one invocation, and, if the invocation comprises further information, extracting at least one entity from the at least one invocation, determining at least one skill based on the user's intent, and storing the at least one entity of the present and/or previous invocation as a previous context. A function is performed based on the skill and the stored previous context.

The present disclosure further relates to a mobile terminal, preferably for use in a system for providing an assistant as described above and/or preferably for using a method as described above. The mobile terminal comprises means for receiving at least one invocation by a user, means for determining a user's intent based on the at least one invocation, and, if the invocation comprises further information, for extracting at least one entity from the at least one invocation. It further comprises means for determining at least one skill based on the user's intent, means for retrieving a previous context, and means for performing a function based on the skill and the stored previous context.

The mobile terminal may further comprise means for transmitting the at least one entity. The mobile terminal may further comprise means for storing the at least one entity of the present and/or previous invocation as a previous context.

The invention is described with reference to the following figures.
Fig. 1 shows an exemplary embodiment of the present invention, and
Fig. 2 shows an exemplary embodiment of the present invention.

The system according to the invention is described with reference to a voice assistant. However, other assistants may also be used with the present system and method. In particular, the voice input may readily be replaced by a text input, e.g. via a user interface such as a keypad, without altering the processing. This makes a text conversion from spoken words to computer-readable text redundant. The terms skill, action and function may be used interchangeably. The system may also be referred to as "assistant", "digital assistant" or "voice assistant".

In general, a voice assistant receives a user's voice or utterance and transforms it into text, such that it can be processed by a processing unit. The processing may also be performed "on the fly", i.e. the received voice is directly transcribed into text. This may increase the need for computing power. Alternatively, the voice may be recorded and (temporarily) stored before it is transcribed or transformed into text. Often, key words or entities are extracted which comprise information about a user's intent. Said intent is then processed into a function or skill accordingly. As explained above, the prior art utilises a 1:1 mapping of a user's intent to a corresponding skill or function via a lookup table. The lookup table thereby links e.g. sample utterances to skill/intents. As skills provided in a sandbox or configured by third-party providers may not communicate with each other, they may not directly interchange information. Therefor, the present invention introduces a context broker, preferably with a global context store. Thereby, the NLU, the skills and the backend may store and retrieve data for and from a user. The components do not need to know each other or need to be synchronised for that process and are thus decoupled from each other. Stored parameters should, however, be named consistently for all units accessing the global context store.

In order to save storage space and to ensure data privacy, the data is not stored indefinitely, e.g. via an expiry date, and not provided for multiple users. Depending on the context data or information, the data may be stored seconds, minutes, hours or days. Furthermore, access to the data may be restricted to single or multiple retrieval, depending on the type of information.

According to an example, the user formulates the voice command for call-back which triggers the function/skill "telephony". Said skill consults the backend for determining the last called participant according to the call log and initiates a call. However, in the case the user recently retrieved a voice mail, the intent is not to call back the last contact according to the call log but rather the contact from which the voice mail originated. According to the prior art, a new command must be provided which allows the user to call back the caller of the voice mail instead of the last caller according to the call log. Alternatively, the command must be reconfigured, thereby losing the original functionality. With the context broker, however, the voice assistant stores e.g. the last action of the user and it is therefore known to the platform that the user is listening to his or her voice mails. The voicemail skill or function may thus temporarily save the caller's number in the context broker prior to replaying the voice mail. In case the user inputs a command for call-back, during the replaying of the voicemail and shortly after it has been finished, the telephony skill may look up a call-back number in the context broker. If no number is saved, the usual procedure is triggered. This may, in the present case, e.g. mean that the last number from the call log is called. In other words, the assistant (either by the NLU or in the skill) first determines whether there is a context stored in the context broker, retrieves the information and responds accordingly or follows the usual procedure if no context is known.

In the present example of a voice mail, the expiry date of the context may be set to one user access or 1 minute, preferably 2 minutes and more preferably 5 minutes since a user probably likes to go back to the usual functionality if no call-back is triggered in that time period. Also, the use of other functions or skills such as a weather forecast may delete or substitute the temporarily stored data since the context has been interrupted. Accordingly, a new played voicemail will also replace the old value.

According to a further example, the user inputs a command for retrieving a weather forecast. In general, the skill or function "weather forecast" is started and said skill looks up the weather for the current location of the user in the backend service. However, if the user has recently consulted the voice assistant for fishing spots, the user may not be interested in the weather of his current location but rather at the fishing spot or even may require particular fishing related weather information, i.e. for estimating the probability of fishing success.

However, according to the present invention, the skill or function, also called platform, may know via the context broker that the user is interested in fishing at a particular spot and may therefore retrieve weather information on that particular spot instead of the current location.

In particular, the context broker may provide the information to the NLU which then temporarily overwrites the current or saved location of the user and uses the location of the searched fishing location. The NLU or the invoked fishing skill may save the fishing location as an entity in the context store such that the next skill may also access this entity even it is not explicitly comprised in the next invocation or command.

Additionally or alternatively, the command may trigger a specific fishing weather skill. The NLU may save in the context store that the user has informed himself about fishing and thus save the entity/attribute fishing. When analysing the invocation weather, multiple skills may be available in this particular example, in other words there is not necessarily a 1:1 mapping of utterances to skills. Via additional evaluation of the saved entity or attribute, an unambiguousness with the utterance may be achieved. An enquiry about the weather may thus lead to an enquiry about fishing weather, if "fishing" is saved in the context store as an attribute, and otherwise lead to a normal weather forecast of the current or saved location.

Users are expecting to use already learned utterances again and again with voice assistances. However, it is the context which defines what kind of action is triggered, i.e. the intent of its users is changing related to the situation they are currently in. Human conversation is enriched by implicit context generation, while smart assistant currently always needs explicit context through a conversation or user interaction.

In general, user specific settings or account linking is used, so that the action can vary based on the stored data. This is a kind of permanent setting or preference setting, which is not adapting to the situation in real time. Alternatively, the action can be defined with parameters (also called slots or entities). If the user does not provide them within the utterance, the action can establish a session and ask with re-prompts until all necessary parameters are provided and it can act accordingly. This kind of real time reaction forces the user into a dialog to explicitly specify each parameter which takes long and needs to be repeated each time the intent is called.

Action specific session data can be used to store parameters, i.e. context related information, dynamically and in combination with user settings even long lasting. Thereby, the re-prompts need not to be repeated within a session of an action. This kind of persistence only works on action or skill or function basis, so two different skills or functions can't share the same context. On the one hand this is a kind of data protection, as many functions are performed in a sandbox, on the other hand this only works when smart assistants explicitly start at least one action or skill or function for a dialog. In some cases, a one-shot invocation only triggers an action with re-prompts and does not allow a long-lasting dialog.

To overcome the described negative aspects, the present disclosure provides the following features. If a smart assistant is using an NLU (Natural Language Understanding) to identify the action and extracting the parameters for it, it can also store them. If the user invokes an action which needs a parameter that is not part of the invocation, it could use a similar entity from its storage. It has to be determined, however, how long those stored parameters should remain valid. Furthermore, the skill or function has no control about that storage, so the user has to mention each parameter at least once.

According to a further example, the skill or action or function can invoke another action or skill or function. The collected parameter in one action can therefore be transferred to another. The actions have to know each other or at least need to communicate via a standardized interface. The interface may limit the kind of parameters which are interchanged. Furthermore, the invocation of the action is explicit by the action and this mechanism does not work if the user invokes the two actions separately in a direct row.

The system and method described above shall be illustrated by the following example. A typical user question may be "How is the weather in Paris?". The question may be recorded by the voice recording unit of the input/output unit and transformed by the voice transformation unit. The natural language understanding (NLU) unit may determine the user's intent, i.e. in this case a weather forecast, and provide said data to the skill unit. The NLU is further configured to extract entities as a context from the text, in this case the city Paris. Thus, the chosen skill or action is "weather" and the additional entity/context is "city = Paris". The entity, i.e. the context, may be stored in a context broker in the backend service unit. Based on the skill, in this case a weather forecast, and the context, in this case the city of Paris, the input/output unit may respond e.g. "In Paris there are sunny conditions with 17°C".

If the user asks as a follow-up question "How much is a 3 star hotel there?", the same procedure as above will be triggered. In this case, however, the action is searching for a hotel with the entity "3 stars", which is extracted directly from the intent. Additionally, the context "city= Paris" is taken from the NLU, allowing the assistant for searching a 3 star hotel in Paris despite not being explicitly asked. The input/output unit may correspondingly respond, e.g. "I have found a 3 star hotel in Paris for 109€".

The user thus does not need to explicitly specify the request for a hotel in Paris but the assistant is able to retrieve context information and respond accordingly.

According to a further example, call-back scenarios may be realised as easy to use as possible. The context of saying "Please call back" will change completely from the default of calling back the caller of the last missed call from the call log when the user is listening to voicemails.

When the user enters the command "Replay voicemail", the voicemail action is started according to the procedure as explained above and the at least one voicemail is replayed. In case the user then enters the command "call-back" during or after listening to a voicemail, the caller of the voicemail may be called back by a telephony action instead of the last caller from the call log.

The same logic may also be employed for other skills or functions dealing with contextual awareness.

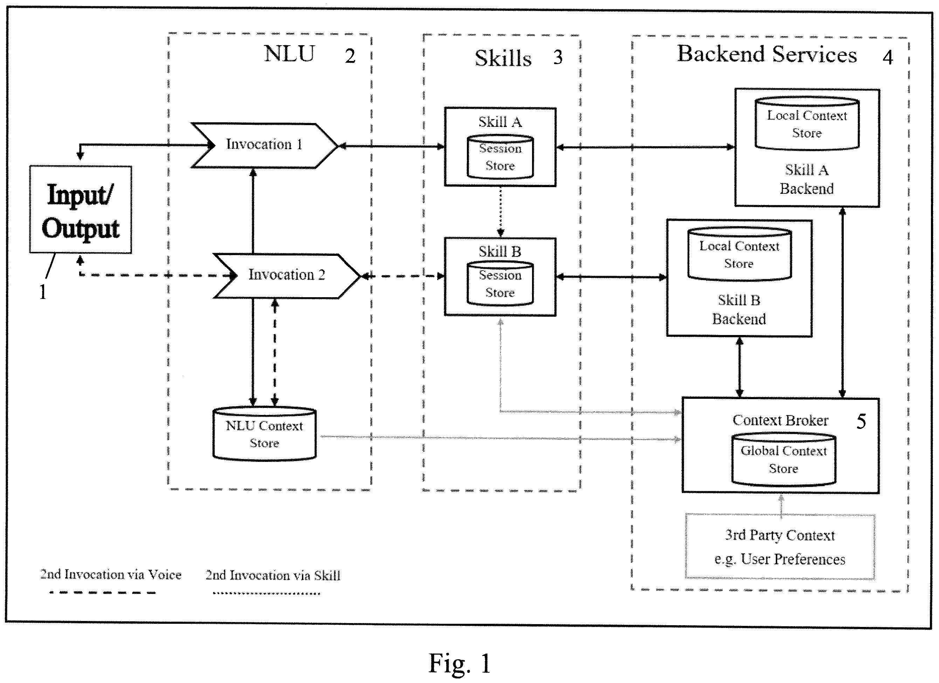

Figure 1 shows an exemplary embodiment according to the present disclosure. The user starts a session by inputting a command, an invocation or utterance, into the input/output unit 1 which is then analysed in the NLU unit 2 and entities or slots are extracted from the invocation. The intent of the user may be determined using example sentences. Said invocation triggers at least one skill or function or action in the skill unit 3. One skill may also invoke a further skill depending on the action and/or the context. Another skill may also be invoked by a further invocation or utterance. Each skill may be provided with a session store in order to store data of the current session. The skills may each be connected to the backend service unit 4, in which a local context store for each skill may be provided. Furthermore, a context broker 5 having a global context store may be provided in the backend service unit 4. Context from third parties such as user preferences may also be input, preferably into the context broker 5. The context broker 5 stores context of the present and/or previous invocation. Particularly the context of a previous invocation may be used for the present invocation. Referring to the above example of replaying a voicemail, the number of the caller that has left the voicemail is saved as the previous context and retrieved, when the user invokes the command "call-back".

Hence, the contextual aware skill receives information from the NLU context store to retrieve an entity needed to perform the correct action. NLU, Skill, Skill Workflow and Other Backends will provide the requested information to the Context Broker 5. The Context Broker 5 is handling the current user related context and any other context provided by third party systems, e.g. time, weather condition, user preferences etc. Preferably, the Context Broker 5 stores the data in a kind of key - value store. Optionally the value also includes a valid by timestamp so the Context Broker 5 can clean up its store. The environment preferably further provides a method like a catalogue to inform about the used keys (i.e. defining standard vocabulary and a third party generated semi standard where applicable).

Referring to the voicemail example above, the voicemail skill will store the number of the caller at the beginning of each announcement of a voicemail, e.g. with a key "Telephone_Number_To_Call_Back" and the corresponding number as a value. When the session is completely finished, it will clean up this key - value pair.

If the user invokes the telephony in the meantime of hearing the voicemail answer, the call-back logic will now ask the context broker 5 for the key (see above), and if there is a value (i.e. a saved number), call back that number via the telephony skill. Otherwise the call log will be consulted and the last caller will be called back.

It may be advantageous that the provider of the platform manages a list of standard values and meaning, i.e. predefined key-value pairs and assignments. Otherwise, different functions or skills may use different keys such as "Telephone_Number_To_Call_Back" or "Telephone_Number_For_Call_Back" and would thus not be compatible. Preferably, any skill provider may introduce their own keys and parameters. More preferably, they are communicated to other providers directly or via a common platform.

It may also be preferable that some data is provided in a secure manner and not all skills are directly allowed to modify or retrieve them. If a platform provider defines such keys, he may also define respective restrictions. For example, an api may be offered which enables the user to set the rights for each skill if he/she wants to give access to them for a specific key. At least the platform provider needs a way to manage and approve those rights, e.g. utilising a special certification program of the developers.

In the previous example, any skill may set the Telephone_Number_To_Call_Back value, but only the telephony skill will be allowed to read it.

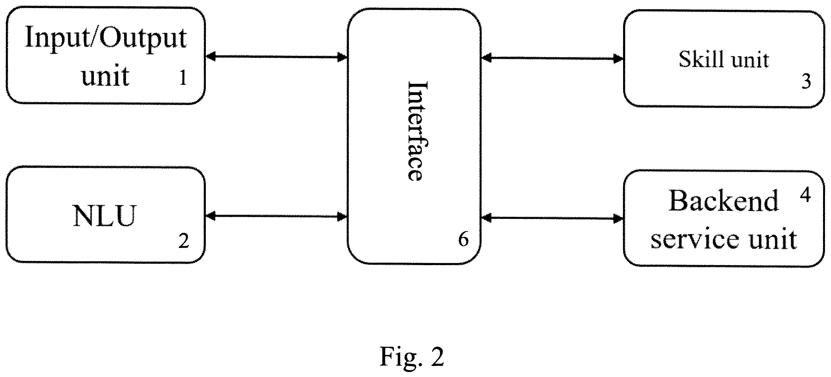

Figure 2 shows a configuration according to an exemplary embodiment of the present disclosure. A system for providing an assistant according to the example comprises an input/output unit 1, a natural language understanding, NLU, unit 2, a skill unit 3 and a backend service unit 1. An interface 6 may be configured to allow communication between at least two of the respective units. Furthermore, a voice receiving unit may be provided to receive a user's invocation and a voice transcription unit may be provided to transform a user's invocation into text, preferably computer-readable text. The voice transformation unit may also form part of the NLU unit 2. A user interface or an interface unit such as a keypad may be provided to receive user's input. The keypad may be a physical or a virtual keypad. As mentioned above, the respective units of the system may be provided in a single device or a plurality of devices such as servers, clouds, mobile terminals, computers, etc.

The present disclosure also encompasses a corresponding method. In particular a method of controlling a system for providing an assistant as explained above.

The present disclosure is further directed towards a mobile terminal adapted to perform said method and examples according to the present disclosure. The mobile terminal comprises means for receiving at least one invocation by a user, means for determining a user's intent based on the at least one invocation, and, if the invocation comprises further information, for extracting at least one entity from the at least one invocation. The mobile terminal further comprises means for determining at least one skill based on the user's intent, means for retrieving a previous context, and means for performing a function based on the skill and the stored previous context.

The mobile terminal preferably comprises means for transmitting the at least one entity. It may be transmitted to other mobile terminals, an external server or any computing device. Alternatively or additionally, the mobile terminal may comprise means for storing the at least one entity of the present and/or previous invocation as a previous context.

In other words, the context may be stored locally, in a cloud, on a server or on other devices. On the mobile terminal, skills may be present as local applications and the terminal may thus implement a context store locally and within the operating system. Via the context store, applications, the operating system and the digital assistant may exchange context-based data.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. System for providing an assistant, comprising:
an input/output unit (1) configured to receive at least one invocation by a user;
a natural language understanding, NLU, unit (2) configured to determine a user's intent based on the at least one invocation, wherein if the invocation comprises further information the NLU unit (2) is further configured to extract at least one entity from the further information of the at least one invocation;
a skill unit (3) configured to determine at least one skill of the system based on the user's intent; and
a backend service unit (4), wherein the skill unit (3) is connected to the backend service unit (4) and the backend service unit comprises a context broker (5) configured to store the at least one entity of the present and/or previous invocation as a previous context,
and
wherein the input/output unit (1) is configured to perform a function based on the skill and the stored previous context, and
**characterised in that**
the backend service unit (4) comprises a global context store and for each skill a local context store, and **in that** the context broker (5) provides data to and retrieves data from the local context stores and the global context store.

2. System according to claim 1, further comprising a voice receiving unit configured to receive the at least one invocation as a voice invocation by a user, and comprising a voice transcription unit configured to transcribe the at least one invocation into text, and/or
further comprising a user interface configured to receive the at least one invocation as a text invocation by a user.

3. System according to claim 1 or 2, wherein each skill comprises a session store configured to store data about the invocation in the skill unit (3).

4. System according to any one of the preceding claims, wherein external data is provided to the context broker (5), wherein the external data comprises user preferences and/or user usage data and/or correlated data.

5. System according to any one of the preceding claims, wherein the NLU unit (2) further comprises an NLU context store, wherein the NLU context store is configured to store data on the at least one invocation and further configured to communicate with the context broker to send and/or retrieve data.

6. System according to any one of the preceding claims, wherein the NLU unit (2) is configured to determine a user's intent based on previously stored example invocations.

7. System according to any one of the preceding claims, wherein the skill unit (3) is configured to determine a further system skill based on the at least one system skill.

8. System according to any one of the preceding claims, wherein the assistant further comprises an interface (6) connecting at least two of the units.

9. System according to any one of the preceding claims, wherein the context broker (5) is configured to store the context for a predetermined length of time and/or a predetermined number of accesses.

10. Method of controlling a system for providing an assistant, the method comprising:
receiving at least one invocation by a user;
determining a user's intent based on the at least one invocation, and, if the invocation comprises further information, extracting at least one entity from the further information of the at least one invocation;
determining at least one skill of the system based on the user's intent;
storing the at least one entity of the present and/or previous invocation as a previous context; and
performing a function based on the skill and the stored previous context,
**characterised in that**
there is a global context store and for each skill a local context store, wherein a context broker provides data to and retrieves data from the local context stores and the global context store.

11. The system according to any of claims 1 to 9, wherein the units of the system are comprised in a single device or in a plurality of devices, preferably a cloud, a server, or a mobile terminal.

12. System according to claim 11, wherein the units of the system are comprised in a mobile terminal and wherein the mobile terminal further comprises means for transmitting the at least one entity.

13. System according to claim 11 or 12, wherein the units of the system are comprised in a mobile terminal and wherein the mobile terminal further comprises means for storing the at least one entity of the present and/or previous invocation as a previous context.

## Patentansprüche

1. System zur Bereitstellung eines Assistenten, das aufweist:
eine Eingabe-/Ausgabeeinheit (1), die konfiguriert ist, mindestens einen Aufruf durch einen Benutzer zu empfangen;
eine Natural Language Understanding, NLU, Einheit (2), die konfiguriert ist, die Absicht eines Benutzers basierend auf dem mindestens einen Aufruf zu bestimmen, wobei die NLU-Einheit (2), falls der Aufruf weitere Informationen aufweist, ferner konfiguriert ist, mindestens eine Entität aus den weiteren Informationen des mindestens einen Aufrufs zu extrahieren;
eine Fähigkeitseinheit (3), die konfiguriert ist, mindestens eine Fähigkeit des Systems basierend auf der Absicht des Benutzers zu bestimmen; und
eine Backend-Diensteinheit (4), wobei die Fähigkeitseinheit (3) mit der Backend-Diensteinheit (4) verbunden ist und die Backend-Diensteinheit einen Kontextvermittler (5) aufweist, der konfiguriert ist, die mindestens eine Entität des aktuellen und/oder vorherigen Aufrufs als vorherigen Kontext zu speichern,
und
wobei die Eingabe-/Ausgabeeinheit (1) konfiguriert ist, eine Funktion basierend auf der Fähigkeit und dem gespeicherten vorherigen Kontext durchzuführen, und
**dadurch gekennzeichnet, dass**
die Backend-Diensteinheit (4) einen globalen Kontextspeicher und für jede Fähigkeit einen lokalen Kontextspeicher aufweist, und dass der Kontextvermittler (5) den lokalen Kontextspeichern und dem globalen Kontextspeicher Daten zuführt und von diesen Daten abruft.

2. System nach Anspruch 1, das ferner eine Sprachempfangseinheit aufweist, die konfiguriert ist, den mindestens einen Aufruf als Sprachaufruf durch einen Benutzer zu empfangen, und das eine Sprachtranskriptionseinheit aufweist, die konfiguriert ist, den mindestens einen Aufruf in Text zu transkribieren, und/oder
das ferner eine Benutzerschnittstelle aufweist, die konfiguriert ist, den mindestens einen Aufruf als Textaufruf durch einen Benutzer zu empfangen.

3. System nach Anspruch 1 oder 2, wobei jede Fähigkeit einen Sitzungsspeicher aufweist, der konfiguriert ist, Daten über den Aufruf in der Fähigkeitseinheit (3) zu speichern.

4. System nach einem der vorhergehenden Ansprüche, wobei dem Kontextvermittler (5) externe Daten zur Verfügung gestellt werden, wobei die externen Daten Benutzerpräferenzen und/oder Benutzernutzungsdaten und/oder korrelierte Daten aufweisen.

5. System nach einem der vorangehenden Ansprüche, wobei die NLU-Einheit (2) ferner einen NLU-Kontextspeicher aufweist, wobei der NLU-Kontextspeicher konfiguriert ist, Daten über den mindestens einen Aufruf zu speichern, und ferner konfiguriert ist, mit dem Kontextvermittler zu kommunizieren, um Daten zu senden und/oder abzurufen.

6. System nach einem der vorhergehenden Ansprüche, wobei die NLU-Einheit (2) konfiguriert ist, die Absicht eines Benutzers basierend auf zuvor gespeicherten Beispielaufrufen zu bestimmen.

7. System nach einem der vorangehenden Ansprüche, wobei die Fähigkeitseinheit (3) konfiguriert ist, basierend auf der mindestens einen Systemfähigkeit eine weitere Systemfähigkeit zu bestimmen.

8. System nach einem der vorhergehenden Ansprüche, wobei der Assistent ferner eine Schnittstelle (6) aufweist, die mindestens zwei der Einheiten verbindet.

9. System nach einem der vorhergehenden Ansprüche, wobei der Kontextvermittler (5) konfiguriert ist, den Kontext für eine vorbestimmte Zeitdauer und/oder eine vorbestimmte Anzahl von Zugriffen zu speichern.

10. Verfahren zum Steuern eines Systems zur Bereitstellung eines Assistenten, wobei das Verfahren aufweist:
Empfangen mindestens eines Aufrufs durch einen Benutzer;
Bestimmen einer Absicht des Benutzers basierend auf dem mindestens einen Aufruf, und, falls der Aufruf weitere Informationen aufweist, Extrahieren mindestens einer Entität aus den weiteren Informationen des mindestens einen Aufrufs;
Bestimmen mindestens einer Fähigkeit des Systems basierend auf der Absicht des Benutzers;
Speichern der mindestens einen Entität des aktuellen und/oder vorherigen Aufrufs als vorherigen Kontext; und
Ausführen einer Funktion basierend auf der Fähigkeit und dem gespeicherten vorherigen Kontext,
**dadurch gekennzeichnet, dass**
es einen globalen Kontextspeicher und für jede Fähigkeit einen lokalen Kontextspeicher gibt, wobei ein Kontextvermittler Daten an die lokalen Kontextspeicher und den globalen Kontextspeicher liefert und aus diesen Daten abruft.

11. System nach einem der Ansprüche 1 bis 9, wobei die Einheiten des Systems in einem einzelnen Gerät oder mehreren Geräten, vorzugsweise einer Cloud, einem Server oder einem mobilen Endgerät enthalten sind.

12. System nach Anspruch 11, wobei die Einheiten des Systems in einem mobilen Endgerät enthalten sind und wobei das mobile Endgerät ferner eine Einrichtung zur Übertragung der mindestens einen Entität aufweist.

13. System nach Anspruch 11 oder 12, wobei die Einheiten des Systems in einem mobilen Endgerät enthalten sind und wobei das mobile Endgerät ferner eine Einrichtung zum Speichern der mindestens einen Entität des aktuellen und/oder vorherigen Aufrufs als vorherigen Kontext aufweist.

## Revendications

1. Système de prestation d'un assistant, comprenant :
une unité d'entrée/sortie (1) configurée pour recevoir au moins un appel d'un utilisateur ; une unité de compréhension de langage naturel, NLU (2), configurée pour déterminer une intention de l'utilisateur sur la base d'au moins un appel, où, si l'appel comprend des informations complémentaires, ladite unité NLU (2) est en outre configurée pour extraire au moins une entité des informations complémentaires dudit au moins un appel ;
une unité de compétence (3) configurée pour déterminer au moins une compétence du système sur la base de l'intention de l'utilisateur ; et
une unité de service dorsal (4), l'unité de compétence (3) étant connectée à ladite unité de service dorsal (4) et ladite unité de service dorsal comprenant un courtier de contexte (5) configuré pour mémoriser ladite au moins une entité de l'appel actuel et/ou précédent en tant que contexte antérieur,
et
où l'unité d'entrée/sortie (1) est configurée pour exécuter une fonction sur la base de la compétence et du contexte antérieur mémorisé,
**caractérisé en ce que**
l'unité de service dorsal (4) comprend un magasin de contexte global et, pour chaque compétence, un magasin de contexte local, et **en ce que** le courtier de contexte (5) fournit des données aux magasins de contexte locaux et au magasin de contexte global, et extrait des données de ceux-ci.

2. Système selon la revendication 1, comprenant en outre une unité de réception vocale configurée pour recevoir ledit au moins un appel sous forme d'appel vocal par un utilisateur, et comprenant une unité de transcription vocale configurée pour transcrire textuellement ledit au moins un appel, et/ou
comprenant en outre une interface utilisateur configurée pour recevoir ledit au moins un appel en tant qu'appel textuel de la part d'un utilisateur.

3. Système selon la revendication 1 ou la revendication 2, où chaque compétence comprend un magasin de sessions configuré pour mémoriser les données relatives à l'appel dans l'unité de compétence (3).

4. Système selon l'une des revendications précédentes, où des données externes sont fournies au courtier de contexte (5), lesdites données externes comprenant des préférences de l'utilisateur et/ou des données d'utilisation de l'utilisateur et/ou des données corrélées.

5. Système selon l'une des revendications précédentes, où l'unité NLU (2) comprend en outre un magasin de contexte NLU, où le magasin de contexte NLU est configuré pour mémoriser des données sur ledit au moins un appel et est en outre configuré pour communiquer avec le courtier de contexte afin d'envoyer et/ou d'extraire des données.

6. Système selon l'une des revendications précédentes, où l'unité NLU (2) est configurée pour déterminer l'intention d'un utilisateur sur la base d'exemples d'appels précédemment mémorisés.

7. Système selon l'une des revendications précédentes, où l'unité de compétence (3) est configurée pour déterminer une autre compétence du système sur la base de ladite au moins une compétence du système.

8. Système selon l'une des revendications précédentes, où l'assistant comprend en outre une interface (6) reliant au moins deux des unités.

9. Système selon l'une des revendications précédentes, où le courtier de contexte (5) est configuré pour mémoriser le contexte pendant une durée prédéterminée et/ou un nombre prédéterminé d'accès.

10. Procédé de commande d'un système de prestation d'un assistant, ledit procédé comprenant :
la réception d'au moins un appel par un utilisateur ;
la détermination d'une intention de l'utilisateur sur la base dudit au moins un appel et, si l'appel comprend des informations complémentaires, l'extraction d'au moins une entité des informations complémentaires dudit au moins un appel ;
la détermination d'au moins une compétence du système sur la base de l'intention de l'utilisateur ;
la mémorisation de ladite au moins une entité de l'appel actuel et/ou précédent en tant que contexte antérieur ; et
l'exécution d'une fonction sur la base de la compétence et du contexte antérieur mémorisé,
**caractérisé**
**en ce qu'**un magasin de contexte global est présenté et, pour chaque compétence, un magasin de contexte local, un courtier de contexte fournissant des données aux magasins de contexte locaux et au magasin de contexte global, et extrayant des données de ceux-ci.

11. Système selon l'une des revendications 1 à 9, où les unités du système sont comprises dans un seul dispositif ou dans une pluralité de dispositifs, de préférence un nuage, un serveur ou un terminal mobile.

12. Système selon la revendication 11, où les unités du système sont comprises dans un terminal mobile, et où le terminal mobile comprend en outre des moyens de transmission de ladite au moins une entité.

13. Système selon la revendication 11 ou la revendication 12, où les unités du système sont comprises dans un terminal mobile, et où le terminal mobile comprend en outre des moyens pour mémoriser ladite au moins une entité de l'appel actuel et/ou précédent en tant que contexte antérieur.
